# EUROPÄISCHE PATENTSCHRIFT

(11) **EP 0 986 228 B1**
(45) Veröffentlichungstag und Bekanntmachung des Hinweises auf die Patenterteilung: **18.10.2006**
(21) Anmeldenummer: 99113489.1
(22) Anmeldetag: 13.07.1999
(51) Int. Cl.: H04L 29/06, H04L 25/14, H04N 7/52

(54) **Verfahren zur Synchronisation von mindestens zwei Datenströmen zwischen Teilnehmern eines Kommunikationssystems**
Synchronisation method for at least two datastreams between users in a communication system
Procédé de synchronisation pour au moins deux flux de données entre des utilisateurs dans un système de communication

(30) Priorität: 08.09.1998 DE 19840506
(43) Veröffentlichungstag der Anmeldung: 15.03.2000
(73) Patentinhaber: SIEMENS AKTIENGESELLSCHAFT, 80333 München (DE)
(72) Erfinder: MARTIN,Hans, D-31141 Hildesheim (DE); Laumen, Josef, 31141 Hildesheim (DE); Schulz, Hogler, 38304 Wolfenbuettel (DE); Fischer, Ralf, 31162 Bad Salzdetfurth (DE)

(56) Entgegenhaltungen:
- WO-A-97/44980
- US-A- 5 642 171
- FAERBER N ET AL: "EXTENSIONS OF ITU-T RECOMMENDATION H.324 FOR ERROR-RESILIENT VIDEO TRANSMISSION" IEEE COMMUNICATIONS MAGAZINE,US,IEEE SERVICE CENTER. PISCATAWAY, N.J, Bd. 36, Nr. 6, Seite 120-128 XP000777794 ISSN: 0163-6804
- ESCOBAR J ET AL: "FLOW SYNCHRONIZATION PROTOCOL" PROCEEDINGS OF THE GLOBAL TELECOMMUNICATIONS CONFERENCE (GLOBECOM),US,NEW YORK, IEEE, Bd. -, Seite 1381-1387 XP000390435 ISBN: 0-7803-0608-2

## Beschreibung

Verfahren zur Synchronisation von mindestens zwei Datenströmen, die in einem Kommunikationssystem über unterschiedliche, parallele Datenverbindungen zu einem Multimedia-Endgerät übertragen werden

Gemäß der Publikation "Flow synchronization Protocol", Julio Esobar, Proceedings of the Global Telecommunications Conference (Globecom), US , New York, IEEE, Seite 1381-1387, XP 000390435 ISBN:0-7803-0608-2 kontrolliert ein übergeordneter Client einen sendeseitigen "source processor", d.h. Quellen-Prozessor, sowie empfangsseitige "Destination Processors", d.h. ziel-Prozessoren, und einen Initiator, um im Multicast-Übertragungsverfahren Daten vom "source processor" an die Vielzahl von destination processors" zu verteilen. Dazu lässt er den Initiator "control messages", d.h. Kontrollnachrichten, an den "source processor" sowie an alle "destination processors" zur Inintialisierung des Multicast-übertragutlgsverfahrens versenden. Dabei werden vom übergeordneten Client die empfangsseitigen "destination processors" in Sychronisationsgruppen vorab beim Initialisieren partitioniert, d.h. untergliedert. Die destination Processors" innerhalb der jeweils vom Client festgelegten Synchronisationsgruppe tauschen untereinander Flussinformationen mittels "period messages", d.h. periodischer Nachrichten, aus, um eine gemeinsame Synchronisationsverzögerung für diese Empfängergruppe von destination processors" zu berechnen. Ausgehend von dem einzelnen "source Processor" werden zu übertragenden Datenströme mit einem Zeitstempel versehen und an die vom Client festgelegten Gruppen der "destination processors" verteilt. Bei diesem Konzept legt somit der übergeordnete Client die jeweilige Gruppe von empfängerseitigen "destination processors" fest, für die eine entsprechende empfangsseitige Verzögerung zur Synchronisation empfangener Datenströme durchgeführt wird. Dies kann in der Praxis zu unflexibel sowie hinsichtlich des Aufwands an zusätzlichen Signalisierungssignalen zu umständlich sein.

In der WO 97/44980 ist für die HSCSD (high speed circuit switched data)- Datenübertragung im Mobilfunknetz vorgesehen, lediglich einen einzelnen, zu übermittelnden Datenstrom eines Datensignals sendeseitig in Dateneinheiten fester Länge zu zerlegen und diese Dateneinheiten ein und desselben Datensignals über mehrere zugeordnete, parallele Transferkanäle zu übertragen. Dabei werden die Dateneinheiten nummeriert, um sie emfängerseitig in richtiger Reihenfolge wieder zum Datensignal zusammensetzen zu können.

Die Publikation "Extensions of ITU-T recommandation H.324 for error- resilient video transmission", Faerber et al, IEEE Communication magazine, US, IEEE Service Center. Piscataway, N.J., Bd. 36, Seiten 120-218, XP000777794 ISSN: 0163-6804 beschäftigt sich lediglich ganz allgemein mit sogenanntem "error tracking", d.h. Fehlernachlaufverfahren für fehleranfällige Mobilfunkkanäle auf dem Gebiet der Videvtibertragung.

Multimedia-Anwendungen für Festnetze sind bereits in den ITU-T-Standards H.323 und H.324 sowohl für paketorientierte, als auch für leistungsvermittelte Dienste spezifiziert <1>.

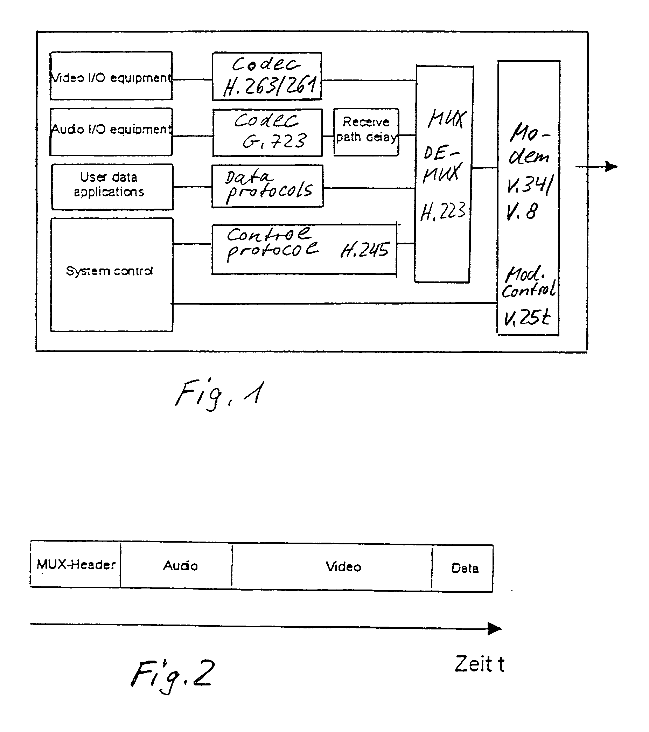

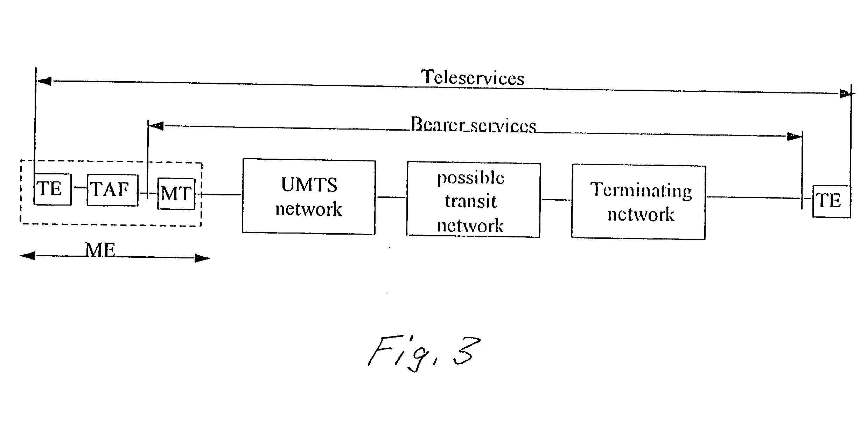

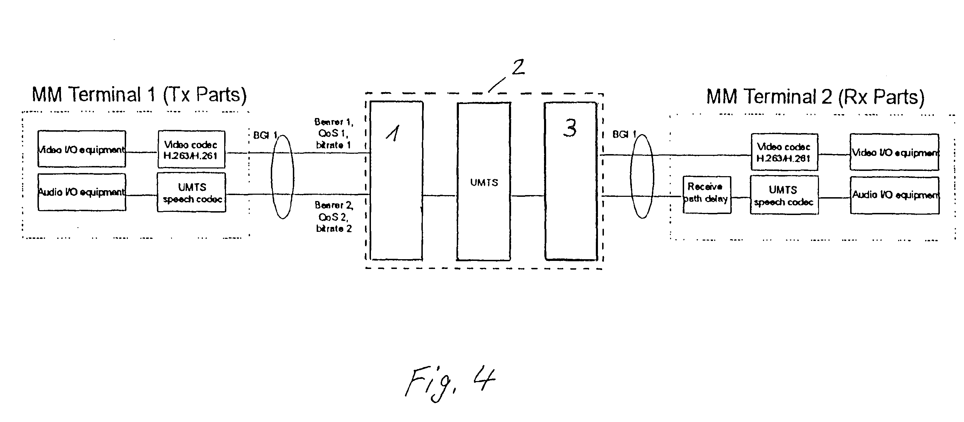

Im Falle leistungsvermittelter Multimedia-Anwendungen, z.B. im Standard H.324 <1>, werden die Daten der einzelnen Applikationen (Audio-, Video-, Daten) zusammen mit Control-Informationen zeitlich zu einem seriellen Bitstrom zusammengefasst. Eine solche Zusammenfassung geschieht wie auch in Figur 1 dargestellt im Zeitmultiplex. Diese spezielle Struktur des Bitstroms bleibt während der weiteren Übertragung zum Empfänger bestehen. Der Zeitmultiplex der einzelnen Applikationen des Multimedia-Standards H.324 gewährleistet somit ihre zeitliche Synchronisation am Modem auf Empfängerseite, d.h. der Audio-Datenstrom erreicht den Empfänger zur gleichen Zeit wie der Video-Bitstrom. Im Falle gewünschter Lippensynchronität wird end-to-end Synchronität zwischen Audio/Video-Equipment erreicht, indem unterschiedliche Verarbeitungsverzögerungen (Processing Delay) bei der Decodierung des Video- und Audiodatenstroms durch den in Figur 1 eingezeichneten Puffer "Receive Path Delay" ausgeglichen werden.

Da Leitungen des Festnetzes typischerweise Bitfehlerraten in der Größenordnung von 10⁻⁶ und kleiner aufweisen, ist in der Mux/Demux-Funktion des Standards H.324 nur ein begrenzter Fehlerschutz gegen Übertragungsfehler vorgesehen. Im Gegensatz zu Festnetzen sind Mobilfunknetze jedoch durch wesentlich höhere Bitfehlerraten während der Übertragung gekennzeichnet und benötigen somit entsprechend ausgefeilte, anspruchsvolle und damit aufwendige Möglichkeiten des Fehlerschutzes.

Ähnlich verhält es sich bei bekannten Systemen, die OEP (unequal error protection) einsetzen, um unterschiedlich sensible Daten gegen Übertragungsfehler zu schützen. Ein Block des GSM-Sprachcodec <2> z.B. besteht aus 260 Bit Sprachdaten. Er ist in zwei, gegenüber Bitfehlern unterschiedlich sensitive und daher auch unterschiedlich wichtige Abschnitte gegliedert. Die einzelnen Abschnitte des Sprachrahmens werden deshalb unterschiedlich stark gegen Übertragungsfehler geschützt. Der erste Abschnitt besteht aus 182 Bits der Schutzklasse 1 (hohe Priorität). Diese erhalten einen Fehlerschutz (Faltungscode), während der zweite Abschnitt, bestehend aus den restlichen 78 Bits der Sprachdatenklasse 2, nicht geschützt werden. Beide Datenklassen werden nach dem (teilweisen) Hinzufügen des Fehlerschutzes mittels zeitmultiplex zusammengefasst. Somit wird eine zeitsynchrone (gleichzeitige) Ankunft der Daten beider Klassen im Empfänger gewährleistet.

Die Erfindung liegt die Aufgabe zugrunde, einen Weg aufzuzeigen, wie zeitgleich gesendete Pakete in mindestens zwei von mehreren Datenströmen mehrerer Multimedia-Anwendungen oder verschiedener Datenschutzklassen, die von einem Sender über unterschiedliche, parallele Datenverbindungen zu einem Multimedia-Endgerät übertragen werden, bei diesem als synchronisiert erkannt werden können. Diese Aufgabe wird durch folgendes erfindungsgemäße Verfahren gelöst:
Verfahren zur synchronen Übertragung von mehreren Datenströmen mehrerer Multimedia-Anwendungen oder verschiedener Datenschutzklassen, die in einem Kommunikationssystem von einem Sender über unterschiedliche, parallele Datenverbindungen zu einem Multimedia-Endgerät übertragen werden, wobei mindestens zwei der zu synchronisierenden, parallelen Datenströme senderseitig paketweise in Datenrahmen untergebracht und zunächst zu einer Gruppe zusammengefasst werden, indem ihnen eine Gruppenidentifizierung als Markierung zugewiesen wird, und wobei in die Datenrahmen der parallelen Datenströme dieser gleichen Gruppe eine Kennzeichnung zur Signalisierung jeweils zeitgleich gesendeter Pakete der Datenströme eingefügt wird.

Die Maßnahmen der Erfindung ermöglichen es einem Benutzer, mehrere Anwendungen zeitsynchron über die zuvor genannten Kommunikationsnetze/ -Systeme übertragen zu können, d.h. die Synchronisierung mehrerer leitungsvermittelter Applikationen in einem Multimedia-Endgerät zu realisieren, wenn die Datenströme der einzelnen Applikationen nicht im Zeitmultiplex , sondern parallel, z.B. in UMTS über parallele Träger - sogenannte Bearer - wie in <3> vorgeschlagen, übertragen werden.

Ferner erlaubt die Erfindung in vorteilhafter Weise die Parallelisierung von Methoden des ungleichmäßigen Fehlerschutzes (UEP) in leistungsvermittelnden Netzen, die Bearer-Service anbieten. Unter dem Bearer-Prinzip ist folgendes zu verstehen: Einer Applikation werden frei konfigurierbare Datenübertragungskanäle zur Verfügung gestellt, deren physikalische Realisierung (Zeit-, Frequenz- und/oder Codemultiplex), d.h. das unter der Anwendung liegende System, der Applikation verborgen bleibt.

In Festnetzen, bzw. z.B. im GSM ist es üblich, verschiedene Datenklassen/Anwendungen unterschiedlich stark gegen Übertragungsfehler zu schützen (UEP). Synchroner Empfang der einzelnen Datenklassen/Anwendungen wird durch insbesondere seriellen Zeitmultiplexbetrieb realisiert. Die Erfindung hingegen zeigt ein Synchronisationsverfahren auf, das es erlaubt, vorgenannte Datenklassen/Applikationen ohne Kenntnis der physikalischen Realisierung (Zeit-, Frequenz- und/oder Code-Multiplex )ihrer Übertragung zeitsynchron zu übertragen.

Soll der synchrone Empfang von Daten mehrerer Applikationen, bzw. verschiedener Datenschutzklassen gewährleistet werden, so können in vorteilhafter Weise insbesondere mehrere Bearer, z.B. eines UMTS-Netzes, zur Übertragung allokiert werden. Gemäß der Erfindung werden diese Bearer dann zu Bearer-Gruppen zusammengefasst und dieser Bearer-Gruppe eine Gruppenidentifizierung (Bearer-Group-Identifier) zugewiesen.

Im Sender werden den Datenströmen der einzelnen Bearer einer Bearer-Gruppe Kennzeichnungen z. B. in Form von Sequenznummern (Sequence Numbers, SN) zugefügt, und zwar so, dass zur gleichen Zeit gesendete Datenrahmen einer Bearer-Gruppe die gleiche "Sequence Number" SN erhalten. Im Empfänger wird zunächst der Bearer Group Identifier" BGI ausgewertet. Der Empfänger weiß nun, welche Bearer synchronisiert werden müssen.

Die Synchronisierung der einzelnen Bearer jeder Bearer-Gruppe erfolgt durch Auswerten der übertragenen Kennzeichnungen SN. Datenrahmen unterschiedlicher Bearer aber mit gleicher Gruppenidentifizierung BGI und gleicher Kennzeichnung SN wurden zur gleichen Zeit gesendet.

Auf der Empfängerseite werden Datenrahmen einer Gruppenidentifizierung BGI und einer Kennzeichnung SN, die vor den übrigen Datenrahmen der gleichen Gruppenidentifizierung BGI und der gleichen Kennzeichnung SN am Empfänger ankommen, zweckmäßiger Weise in einem Puffer zwischengespeichert, bis entweder alle übrigen Rahmen der gleichen Gruppenidentifizierung BGI empfangen wurden oder eine vordefinierte maximal zulässige Verzögerung (Time-Out-Zeit) überschritten wurde. Auf diese Weise werden "schnellere" Datenströme gepuffert, d.h. es wird auf den "langsamsten" Bearer gewartet, bevor die Daten beispielsweise an einen Decoder weitergeleitet werden.

Nutzt im UMTS-System ein Endgerät (Sender) mehrere Bearer-Services gleichzeitig, z.B. für mehrere Anwendungen oder um UEP mittels mehrerer Bearer zu realisieren, so kann ein synchroner (gleichzeitiger) Empfang der einzelnen Bearer im empfangenen Endgerät im Gegensatz zu bisherigen Lösungen immer gewährleistet werden.

Die physikalische Realisierung der Übertragung eines Bearers zum Empfänger bleibt der Applikation verborgen. Es bleibt also dem Netz überlassen, ob die Bearer im Zeit-, Frequenz- und /oder Codemultiplex übertragen werden. Die Synchronisierung dieser Bearer war bisher nur für eine Übertragung im Zeitmultiplex gewährleistet.

Die Erfindung ist insbesondere anwendbar in Systemen/Netzen, die - ähnlich wie UMTS oder alle IMT 2000-Kandidaten - ihren Applikationen transparente Bearer Services zur Datenübertragung zur Verfügung stellen und in denen entweder zwei oder mehrere leistungsvermittelte Multimedia-Anwendungen zeitlich synchron ablaufen sollen, z. B. Lippensynchronität von Audio- und Video-Applikationen, oder UEP für eine leistungsvermittelte Anwendung, z.B. GSM-Sprache, über parallele Kanäle durchgeführt werden sollen. Natürlich ist die Erfindung auch für beliebige Kombinationen aus vorgenannten Möglichkeiten einsetzbar.

Die Erfindung ist nicht auf die angegebenen Mobilfunksysteme beschränkt.

Die Erfindung betrifft auch eine Sender-Einrichtung nach Anspruch 16 sowie eine Empfänger- Einrichtung nach Anspruch 17.

### Zeichnungen

Anhand der weiteren Zeichnungen werden Ausführungsbeispiele der Erfindung näher erläutert. Es zeigen
Figur 3 ein Blockschaltbild zur Erläuterung der von einem UMTS-Netz unterstützten Dienste (Bearerprinzip),
Figur 4 ein Blockschaltbild für die synchrone Übertragung von zwei Multimedia-Diensten über ein modifiziertes UMTS-Kommunikationssystem,
Figur 5 die senderseitige Einfügung von Kennzeichnungen und Gruppenidentifizierungen für die zu übertragenden Datenströme und
Figur 6 die empfangsseitige Auswertung der in Figur 4 eingefügten Kennzeichnungen und Gruppenidentifizierungen.

### Beschreibung von Ausführungsbeispielen

Zum besseren Verständnis der Vorgehensweise bei der Erfindung wird zuerst das Bearerprinzip am Beispiel UMTS im Zusammenhang mit Figur 3 erläutert. Die in Figur 3 dargestellte Mobilstation ME besteht aus einer Teilnehmerendgeräte-Einheit TE, einer Terminal-Anpassungsfunktionseinheit TAF sowie einem Abschluß MT (Mobile Termination). Der Abschluß MT, das UMTS-Kommunikationsnetz, das optionale Übergangsnetz, sowie das Abschlußnetz sind den Bearer Services zugeordnet. Unter Tele-Services werden die Bear-Services einschließlich den Teilnehmerendgeräten verstanden.

Ein wesentliches Ziel der Einführung von dritte Generation vom Mobilfunksystemen ist u. a. die Trennung von Applikation und mobilfunkspezifischer Datenübertragung. Dritte Generation Mobilfunksysteme sollen für beliebige, d. h. auch zukünftige, Applikationen nutzbar sein. Dies erfordert gegenüber bisherigen Mobilfunksystemen zusätzliche Fähigkeiten. Im UMTS wurden aus diesem Grunde Bearer-Services eingeführt. Aus der Sicht einer Applikation (TE, bzw. TE+TAF gemäß Fig. 3) ist ein Bearer-Service ein frei parametrisierbarer Datenübertragungskanal. Die Applikation definiert hierbei, ohne Kenntnis der physikalischen Realisierung, die für sie sichtbaren und wichtigen Eigenschaften des Kanals (Quality of Service, QoS). Dies sind z. B. die Datenrate, die der Applikation zur Verfügung steht, maximale Bitfehlerrate und Übertragungsverzögerung.

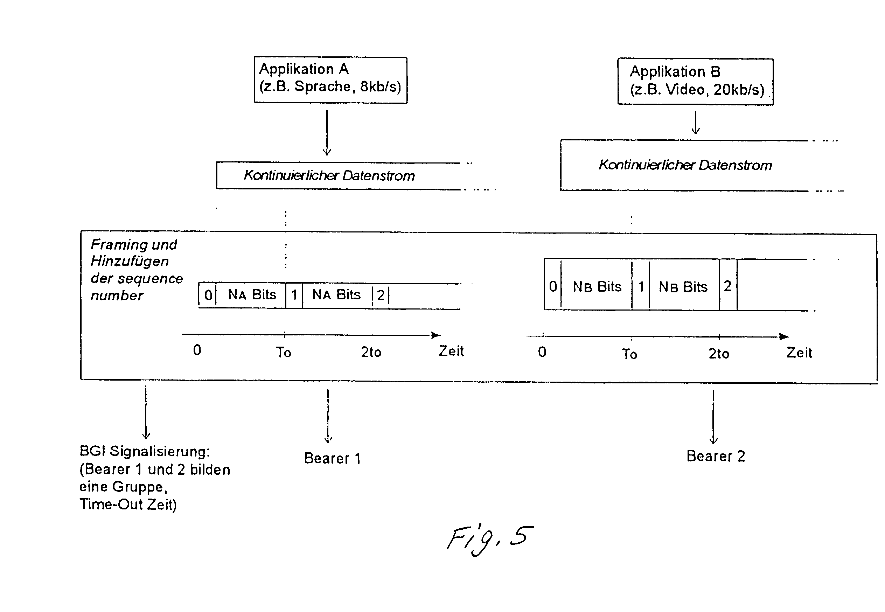

Bei dem in Figur 4 dargestellten Ausführungsbeispiel soll folgendes Szenario betrachtet werden: Zwei UMTS-Endgeräte MM-Terminal 1 und MM-Terminal 2 wollen eine lippensynchrone Audio/Video-Verbindung zueinander unterhalten. Als Video-Codec wird ein Codec nach dem H.263-Standard gewählt, während die Audio-Übertragung den für den UMTS standardisierten Sprachcodec benutzt. Senderseitig werden den Anforderungen des H.263-Standards und des UMTS-Sprachkodecs entsprechende Ressourcen (Bearer-Services) für diese beiden Applikationen allokiert: Anforderungen gemäß Datenrate, Bitfehlerrate und Verzögerung. Das heißt für die Anwendung Video werden dem UMTS-Netz z. B. eine konstante Datenrate von 20 kbps mit einem maximal zulässigen Delay von 150 ms und einer Bitfehlerrate von 10⁻⁶ abverlangt (Bearer 1). Die Applikation Sprache verlangt dagegen einen Bearer-Service (Bearer 2) mit z. B. 8 kbps Datenrate, 30 ms Verzögerung und 10⁻³ Bitfehlerrate. Das Sendegerät signalisiert nun dem Netz, daß diese beiden Applikationen synchron übertragen werden sollen. Diese Signalisierung wird im Block 1 des UMTS-Systems 2 durchgeführt, wo in die zu synchronisierenden Datenströme eine Kennzeichnung SN und eine Gruppenidentifizierung BGI untergebracht wird:
- Bearer 1 und Bearer 2 werden zur Bearer-Gruppe 1 mit BGI 1 zusammengefaßt. Die Bearer-Gruppenidentifizierung BGI wird weiter über das Netz zum Pendant im Empfänger, dem Block 3, zur Auswertung der Kennzeichnung SN und der Gruppenidentifizierung BGI übertragen. Mit der Gruppenidentifizierung BGI wird signalisiert, welche Bearer zu einer Bearer-Gruppe gehören und wie hoch die maximal zulässige Verzögerung (Time-Out-Wert) bemessen ist,
- zum Zwecke der Synchronisierung wird den beiden Datenströmen aus Video und Audio eine Rahmenstruktur aufgezwungen. Jeder Datenstrom wird in Rahmen, insbesondere gleicher Dauer, unterteilt. Die Anzahl der Bits pro Rahmen variiert je nach Anwendung, da die beiden Anwendungen im vorgestellten Beispiel mit unterschiedlichen Datenraten arbeiten. Ein Videorahmen der Dauer T₀ besteht aus N_{V} Bits und ein Audiorahmen der gleichen Dauer T₀ enthält N_{A} Bits ,
- gleichzeitig gesendeten Rahmen der Bearer einer Bearer-Gruppe, hier Bearer 1 und 2, werden anschließend, wie in Figur 5 gezeigt, gleiche Kennzeichnungen SN zugefügt. Die Gruppenidentifizierung BGI kann als Inbandsignalisierung erfolgen, d.h. Unterbringung in den Datenströmen, oder es kann ein separater Signalisierungskanal hierfür vorgesehen sein.

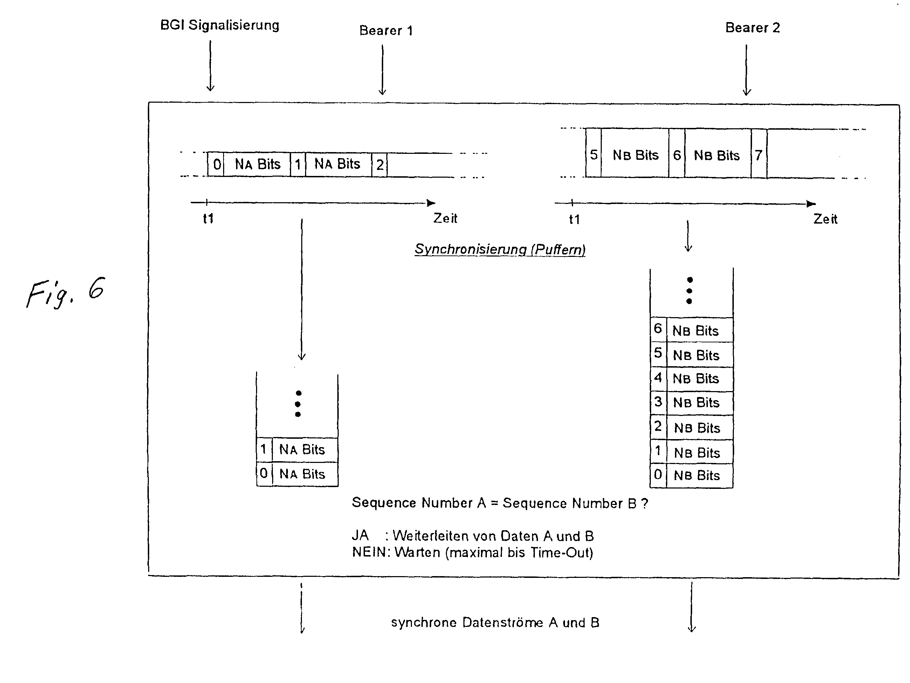

Im Empfängerblock 3 wird die BGI-Signalisierung ausgewertet, d. h. es wird erkannt, daß Bearer 1 und Bearer 2 zu einer Bearer-Gruppe gehören und somit synchron ausgegeben werden müssen. Hierzu werden zunächst die Kennzeichnungen SN aus Bearer 1 und Bearer 2 aus dem empfangenen Datenrahmen ausgelesen. In der Regel werden zeitgleich gesendete Datenrahmen von Bearern mit unterschiedlichen Quality of Service (QoS) Parametern zu unterschiedlichen Zeiten empfangen, da unterschiedliche QoS-Parameter unterschiedliche Fehlerschutzverfahren benötigen, die jeweils verschiedene, maximale Übertragungsverzögerungen bewirken. Zeitgleich gesendete Datenrahmen einer Bearer-Gruppe sind durch gleiche Kennzeichnungen SN gekennzeichnet. Wird ein Datenrahmen mit der Kennzeichnung des Zeitranges N eines Bearers einer Bearer-Gruppe empfangen, so wird dieser Rahmen solange gepuffert, bis entweder die Datenrahmen der Kennzeichnung des Ranges N aller anderen Bearer mit gleicher Gruppenidentifizierung BGI empfangen wurden, oder aber die maximal zulässige Verzögerung verstrichen ist (vgl. Fig. 6 Time-Out Zeit). Erst dann werden alle empfangenen Datenrahmen der Kennzeichnung mit dem Zeitrang N an die Applikationen weitergereicht.

### Quellen

<1> "Terminal for Low Bitrate Multimedia Communication" , ITU-T Recomm. H.324
<2> GSM Global System for Mobile Service, J. Eberspächer / H.J. Vögel, 1997, ISBN 3-519-06192-9
<3> Scenarios for a UMTS Multimedia Service, ETSI Tdoc SMG1 520/98, Bosch, July 6-10, 1998
<4> ETSI: TS 22.05 V 3.0.0 (1998-03), Universal Mobile Telecommunications System (UMTS), Services and Service Capabilities

## Patentansprüche

1. Verfahren zur synchronen Übertragung von mehreren Datenströmen mehrerer Multimedia-Artwendungen oder verschiedener Datenschutzklassen, die in einem Kommunikationssystem von einem Sender über unterschiedliche, parallele Datenverbindungen zu einem Multimedia-Endgerät übertragen werden,
wobei mindestens zwei der zu synchronisierenden, parallelen Datenströme senderseitig paketweise in Datenrahmen untergebracht und zunächst zu einer Gruppe zusammengefasst werden, indem ihnen eine Gruppenidentifizierung (BGI) als Markierung zugewiesen wird, und
wobei in die Datenrahmen der parallelen Datenströme dieser gleichen Gruppe eine Kennzeichnung zur Signalisierung jeweils zeitgleich gesendeter Pakete der Datenströme eingefügt wird.

2. Verfahren nach Anspruch 1, **dadurch gekennzeichnet, dass** die Signalisierung der Gruppenidentifizierung (BGI) in einem Datenstrom selbst vorgenommen wird.

3. Verfahren nach Anspruch 1, **dadurch gekennzeichnet, dass** die Signalisierung der Gruppenidentifizierung (BGI) in einem separaten Signalisierungskanal vorgenommen wird.

4. Verfahren nach einem der Ansprüche 1 bis 3, **dadurch gekennzeichnet, dass** die Datenströme paketweise in Datenrahmen jeweils gleicher Dauer untergebracht werden.

5. Verfahren nach einem der Ansprüche 1 bis 4, **dadurch gekennzeichnet, dass** als Datenströme Trägerdienste, insbesondere Bearer Services gemäß dem UMTS-Standard, verwendet werden.

6. Verfahren nach einem der Ansprüche 1 bis 5, **dadurch gekennzeichnet, dass** empfangsseitig die Gruppenidentifizierungen (BGI) ausgewertet werden, um Pakete einander zugehöriger Datenströme zuordnen zu können.

7. Verfahren nach einem der Ansprüche 1 bis 6, **dadurch gekennzeichnet, dass** mit einer Gruppenidentifizierung (BGI) auch signalisiert wird, wie hoch die maximale zulässige Verzögerung für eine empfangsseitige Zwischenpufferung der zu einer Gruppe gehörigen Pakete bemessen ist.

8. Verfahren nach Anspruch 7, **dadurch gekennzeichnet, dass** die übertragenen Kennzeichnungen empfangsseitig ausgelesen werden und die zugehörigen Datenrahmen so lange zwischengepuffert werden, bis die Datenrahmen gleicher Kennzeichnung aller anderen, zu einer Gruppe gehörigen Datenrahmen empfangen wurden.

9. Verfahren nach einem der Ansprüche 7 oder 8, **dadurch gekennzeichnet, dass** empfangsseitig nach Erreichen der maximal zulässigen Verzögerung die Datenrahmen gleicher Kennzeichnung weitergeleitet werden, die bis zum Erreichen der maximal zulässigen Verzögerung eingegangen sind.

10. Verfahren nach einem der Ansprüche 1 bis 9, **dadurch gekennzeichnet, dass** empfangsseitig Datenrahmen mit gleicher Kennzeichnung einer Gruppe zeitgleich an einen Applikationsdecoder geleitet werden.

11. Verfahren nach einem der Ansprüche 1 bis 10, **dadurch gekennzeichnet, dass** die Synchronisierung unabhängig von der physikalischen Realisierung der Übertragung durchgeführt wird.

12. Verfahren nach einem der Ansprüche 1 bis 11, **dadurch gekennzeichnet, dass** Datenströme unterschiedlicher Datenklassen mit ungleichmäßigem Fehlerschutz versehen werden, insbesondere mit Unequal Error Protection für einen Sprachcodec.

13. Verfahren nach Anspruch 11 und 12, **dadurch gekennzeichnet, dass** die Datenströme mehrerer Multimedia-Anwendungen mit unterschiedlichem Fehlerschutz versehen werden.

14. Verfahren nach einem der Ansprüche 1 bis 13, **dadurch gekennzeichnet, dass** Datenströme einer Gruppe für eine audiovisuelle Übertragung eingesetzt werden, wobei die Synchronisation insbesondere eine Lippensynchronität gewährleistet.

15. Verfahren nach einem der Ansprüche 1 bis 14, **dadurch gekennzeichnet, dass** zumindest ein Teil des Kommunikationssystems aus UMTS besteht, wo Daten, insbesondere über parallele Bearer übertragen werden.

16. Sender-Einrichtung zur synchronen Übertragung von mehreren Datenströmen mehrerer Multimedia-Anwendungen oder verschiedener Datenschutzklassen, die in einem Kommunikationssystem über unterschiedliche, parallele Datenverbindungen zu einem Multimedia-Endgerät übertragen werden, insbesondere nach einem der vorhergehenden Ansprüche,
wobei sendeseitig Mittel (1) zur paketweisen Unterbringung der zu synchronisierenden, parallelen Datenströme in Datenrahmen und weitere Mittel (1) zur Markierung von mindestens zwei dieser zu synchronisierenden, parallelen Datenströme als Gruppe mit einer Gruppenidentifizierung (BGI) vorgesehen sind, und wobei Mittel (1) zur Einfügung einer Kennzeichnung zur Signalisierung jeweils zeitgleich gesendeter Pakete der parallelen Datenströme dieser gleichen Gruppe vorgesehen sind.

17. Empfänger-Einrichtung (3) zum Auswerten von mehreren Datenströmen mehrerer Multimedia-Anwendungen oder verschiedener Datenschutzklassen, die in einem Kommunikationssystem von einem Sender über unterschiedliche, parallele Datenverbindungen zu einem Multimedia-Endgerät übertragen werden, insbesondere nach einer der vorhergehenden Ansprüche,
wobei Mittel (3) zur Auswertung der Gruppenidentifizierung (BGI) vorgesehen sind, durch die mindestens zwei der synchron gesendeten, parallelen Datenströme als Gruppe markiert sind, und wobei weitere Mittel (3) zur Auswertung einer Kennzeichnung in den Datenrahmen der empfangenen, parallelen Datenströme dieser Gruppe vorgesehen sind, die die Synchronisation jeweils zeitgleich gesendeter Pakete der parallelen Datenströme dieser gleichen Gruppe signalisiert.

18. Empfänger-Einrichtung nach Anspruch 17, **dadurch gekennzeichnet, dass** Mittel zur Zwischenpufferung der zu einer Gruppe gehörigen Pakete der Datenströme vorgesehen sind, um zu erreichen, dass Applikationen von Multimedia-Anwendungen, die nicht im Zeitmultiplex übertragen werden, zeitgleich an einen zugehörigen Applikationsdecoder geleitet werden.

## Claims

1. Method for the synchronous transmission of a plurality of data streams of a plurality of multimedia applications or of different data protection classes which are transmitted in a communication system by a transmitter over different, parallel data links to a multimedia terminal device,
wherein at least two of the parallel data streams to be synchronised are accommodated on the transmitter side on a packet-oriented basis in data frames and initially combined into a group by their being assigned a group identifier (BGI) as a marker, and
wherein an identifier for signalling of, in each case, simultaneously transmitted packets of the data streams is inserted into the data frames of the parallel data streams of this same group.

2. Method according to claim 1, **characterised in that** the signalling of the group identifier (BGI) is performed in a data stream itself.

3. Method according to claim 1, **characterised in that** the signalling of the group identifier (BGI) is performed in a separate signalling channel.

4. Method according to one of the claims 1 to 3, **characterised in that** the data streams are accommodated on a packet-oriented basis into data frames of equal duration in each case.

5. Method according to one of the claims 1 to 4, **characterised in that** carrier services, in particular bearer services conforming to the UMTS standard, are used as data streams.

6. Method according to one of the claims 1 to 5, **characterised in that** the group identifiers (BGI) are evaluated on the receive side in order to enable packets of data streams associated with one another to be assigned.

7. Method according to one of the claims 1 to 6, **characterised in that** a group identifier (BGI) is also used to signal how high the maximum permissible delay for a receive-side buffering of the packets belonging to a group is set.

8. Method according to claim 7, **characterised in that** the transmitted identifiers are read out on the receive side and the associated data frames are buffered until the data frames with the same identifier of all other data frames belonging to a group have been received.

9. Method according to one of the claims 7 or 8, **characterised in that** on the receive side, after reaching the maximum permissible delay, the data frames with the same identifier that have been received up to the time of reaching the maximum permissible delay are forwarded.

10. Method according to one of the claims 1 to 9, **characterised in that** on the receive side data frames with the same identifier of a group are routed simultaneously to an application decoder.

11. Method according to one of the claims 1 to 10, **characterised in that** the synchronisation is performed independently of the physical implementation of the transmission.

12. Method according to one of the claims 1 to 11, **characterised in that** data streams of different data classes are provided with unequal error protection, in particular with unequal error protection for a speech codec.

13. Method according to claim 11 and 12, **characterised in that** the data streams of a plurality of multimedia applications are provided with different error protection.

14. Method according to one of the claims 1 to 13, **characterised in that** data streams of a group are used for an audiovisual transmission, the synchronisation guaranteeing in particular lip synchronism.

15. Method according to one of the claims 1 to 14, **characterised in that** at least a part of the communication system consists of UMTS, where data is transmitted in particular via parallel bearers.

16. Transmitter device for the synchronous transmission of a plurality of data streams of a plurality of multimedia applications or of different data protection classes which are transmitted in a communication system over different, parallel data links to a multimedia terminal device, in particular according to one of the preceding claims,
wherein there are provided on the transmit side means (1) for the packet-oriented accommodation, in data frames, of the parallel data streams that are to be synchronised, and further means (1) for marking at least two of said parallel data streams that are to be synchronised as a group with a group identifier (BGI), and wherein means (1) are provided for inserting an identifier for signalling in each case simultaneously transmitted packets of the parallel data streams of this same group.

17. Receiver device (3) for evaluating a plurality of data streams of a plurality of multimedia applications or of different data protection classes which are transmitted in a communication system by a transmitter over different, parallel data links to a multimedia terminal device, in particular according to one of the preceding claims,
wherein means (3) are provided for evaluating the group identifier (BGI) by means of which at least two of the synchronously transmitted, parallel data streams are marked as a group, and wherein further means (3) are provided for evaluating an identifier in the data frames of the received, parallel data streams of this group, which identifier signals the synchronisation of in each case simultaneously transmitted packets of the parallel data streams of this same group.

18. Receiver device according to claim 17, **characterised in that** means for buffering the packets of the data streams belonging to a group are provided in order to ensure that applications of multimedia applications that are not transmitted in time-division multiplexing mode are routed simultaneously to an associated application decoder.

## Revendications

1. Procédé pour la transmission synchrone de plusieurs flux de données appartenant à plusieurs applications multimédia ou à des classes de protection de données différentes, qui sont transmis d'un émetteur vers un terminal multimédia par le biais de liaisons de données parallèles différentes dans un système de communication,
au moins deux des flux de données parallèles à synchroniser étant insérés par paquets dans des trames de données, côté émetteur, et regroupés d'abord pour former un groupe par attribution à ces flux d'un identifiant de groupe (BGI) en tant que marquage et
une marque distinctive servant à la signalisation de paquets des flux de données envoyés à chaque fois simultanément étant insérée dans les trames de données des flux de données parallèles de ce même groupe.

2. Procédé selon la revendication 1, **caractérisé en ce que** la signalisation de l'identifiant de groupe (BGI) est réalisée dans un flux de données lui-même.

3. Procédé selon la revendication 1, **caractérisé en ce que** la signalisation de l'identifiant de groupe (BGI) est réalisée dans un canal de signalisation séparé.

4. Procédé selon l'une des revendications 1 à 3, **caractérisé en ce que** les flux de données sont insérés par paquets dans des trames de données de durée à chaque fois égale.

5. Procédé selon l'une des revendications 1 à 4, **caractérisé en ce que** l'on utilise, en tant que flux de données, des services supports, notamment des services supports (*bearer services)* selon la norme UMTS.

6. Procédé selon l'une des revendications 1 à 5, **caractérisé en ce que** les identifiants de groupe (BGI) sont analysés côté récepteur pour pouvoir ranger les paquets de flux de données se correspondant.

7. Procédé selon l'une des revendications 1 à 6, **caractérisé en ce qu'**un identifiant de groupe (BGI) signale également la valeur du délai maximum autorisé pour une mise en mémoire tampon intermédiaire, côté récepteur, des paquets appartenant à un groupe.

8. Procédé selon la revendication 7, **caractérisé en ce que** les marques distinctives transmises sont extraites, côté récepteur, et les trames de données correspondantes sont mises en mémoire tampon intermédiaire jusqu'à ce que les trames de données pourvues de la même marque distinctive de toutes les autres trames de données appartenant à un groupe aient été reçues.

9. Procédé selon l'une des revendications 7 ou 8, **caractérisé en ce que** les trames de données pourvues de la même marque distinctive qui sont arrivées jusqu'à l'écoulement du délai maximum autorisé sont transmises, côté récepteur, une fois atteint le délai maximum autorisé.

10. Procédé selon l'une des revendications 1 à 9, **caractérisé en ce que** des trames de données d'un groupe pourvues de la même marque distinctive sont transmises en même temps, côté récepteur, à un décodeur d'application.

11. Procédé selon l'une des revendications 1 à 10, **caractérisé en ce que** la synchronisation est exécutée indépendamment de la réalisation physique de la transmission.

12. Procédé selon l'une des revendications 1 à 11, **caractérisé en ce que** des flux de données appartenant à des classes de données différentes sont dotés d'une protection inégale contre les erreurs, et notamment d'une protection inégale contre les erreurs (*Unequal Error Protection)* pour un codec vocal.

13. Procédé selon les revendications 11 et 12, **caractérisé en ce que** les flux de données de plusieurs applications multimédias sont dotés d'une protection inégale contre les erreurs.

14. Procédé selon l'une des revendications 1 à 13, **caractérisé en ce que** des flux de données d'un groupe sont utilisés pour une transmission audiovisuelle, la synchronisation garantissant notamment une synchronisation des lèvres avec la parole.

15. Procédé selon l'une des revendications 1 à 14, **caractérisé en ce qu'**au moins une partie du système de communication est formée d'un réseau UMTS où les données sont transmises notamment par le biais de supports parallèles.

16. Dispositif émetteur pour la transmission synchrone de plusieurs flux de données appartenant à plusieurs applications multimédia ou à des classes de protection de données différentes, qui sont transmis vers un terminal multimédia par le biais de liaisons de données parallèles différentes dans un système de communication, notamment selon l'une des revendications précédentes, des moyens (1) étant prévus, côté émetteur, pour l'insertion par paquets des flux de données parallèles à synchroniser dans des trames de données, ainsi que d'autres moyens (1) pour le marquage d'au moins deux de ces flux de données parallèles à synchroniser en tant que groupe doté d'un identifiant de groupe (BGI), et des moyens (1) étant prévus pour l'insertion d'une marque distinctive servant à la signalisation de paquets des flux de données parallèles de ce même groupe envoyés à chaque fois simultanément.

17. Dispositif récepteur (3) pour l'analyse de plusieurs flux de données appartenant à plusieurs applications multimédia ou à des classes de protection de données différentes, qui sont transmis d'un émetteur vers un terminal multimédia par le biais de liaisons de données parallèles différentes dans un système de communication, notamment selon l'une des revendications précédentes, des moyens (3) étant prévus pour l'analyse de l'identifiant de groupe (BGI) grâce auquel au moins deux des flux de données parallèles envoyés de manière synchrone sont marqués en tant que groupe, et d'autres moyens (3) étant prévus pour l'analyse d'une marque distinctive dans les trames de données des flux de donnés parallèles reçus de ce groupe qui signale la synchronisation de paquets des flux de données parallèles de ce même groupe envoyés à chaque fois simultanément.

18. Dispositif récepteur selon la revendication 17, **caractérisé en ce que** des moyens pour la mise en mémoire tampon intermédiaire des paquets des flux de données appartenant à un groupe sont prévus pour faire en sorte que des applications (*applications*) d'applications multimédia ne faisant pas l'objet d'une transmission par multiplexage temporel soient amenées simultanément à un décodeur d'application correspondant.
